# EUROPÄISCHE PATENTSCHRIFT

(11) **EP 1 878 849 B1**
(45) Veröffentlichungstag und Bekanntmachung des Hinweises auf die Patenterteilung: **21.03.2012**
(21) Anmeldenummer: 07013205.5
(22) Anmeldetag: 05.07.2007
(51) Int. Cl.: E04F 17/02, F16L 59/02

(54) **Als Fertigbauteil ausgebildetes Dämmstoffelement mit gewickelter Rohrschale für die Aufnahme einer Heissleitung**
Insulation element shaped as prefabricated building part with coiled pipe shell for a hot gas conduit.
Elément isolant préfabriqué constitué de couches enroulées formant une enveloppe tubulaire pour la réception d'une conduite d'évacuation de gaz chaud.

(30) Priorität: 10.07.2006 DE 202006010637 U
(43) Veröffentlichungstag der Anmeldung: 16.01.2008
(73) Patentinhaber: SAINT-GOBAIN ISOVER G+H AG, 67059 Ludwigshafen (DE); Schiedel AG, 1120 Wien (AT)
(72) Erfinder: Albrecht, Volker, 67360 Lingenfeld (DE); Bissinger, Claus, Dr., 67271 Kleinkarlbach (DE); Elfert, Thomas, 04668 Leipnitz (DE); Maas, Siegbert, 85386 Dietersheim (DE)
(74) Vertreter: Bockhorni & Kollegen

(56) Entgegenhaltungen:
- EP-A- 1 696 167
- EP-A- 1 696 168
- EP-A1- 0 133 083
- EP-A1- 1 522 800
- EP-A2- 0 217 396
- EP-A2- 1 097 807
- EP-A2- 1 108 829
- DE-T2- 60 205 392
- DE-U1- 29 908 044
- DE-U1-202004 008 767
- LU-A1- 69 498
- US-B1- 6 403 182

## Beschreibung

Die Erfindung betrifft ein als Fertigbauteil ausgebildetes Dämmstoffelement gemäß Anspruch 1 sowie ein System zur Dämmung gemäß Anspruch 24.

Zum Durchführen einer Heißleitung durch Gebäudewände, Geschossdecken, Dächer, Gefache und/oder dergleichen werden in das Mauerwerk bzw. in das Gefach Durchbrüche eingebracht (im Folgenden nicht einschränkend als Wand- oder Deckenöffnung bezeichnet), bzw. sind solche bereits von vornherein vorgesehen, durch die die betreffende Heißleitung durchgeführt werden kann. Unter Heißleitungen im Sinne dieser Anmeldung werden vorrangig eine Verbindungsleitung (DIN V 18160), ein Abgasrohr, eine Abgasleitung oder ein Schornstein bzw. Schornsteinelement verstanden, die beispielsweise aus Stahlblech oder Schamotte gebildet sind. Der Handwerker vor Ort muss die entsprechende Heißleitung zunächst durch die Wand- oder Deckenöffnung führen und anschließend den verbleibenden Zwischenraum ausfüllen, um einerseits die Wand- oder Deckenöffnung entsprechend abzudichten und andererseits die Heißleitung in derselbigen zu fixieren. Hierzu wird in der Praxis meist mineralische Stopfwolle verwendet. Diese gängige wenn auch umständliche Praxis hat den Nachteil, dass je nach Ausführung durch den Handwerker vor Ort unterschiedliche Füllqualitäten und damit zum Teil unzureichende Dämmungseigenschaften erzielt werden.

Zur Lösung dieser Problematik sind bereits als Fertigteil ausgebildete Dämmstoffelemente für die Aufnahme von Schornsteinrohren oder dergleichen entwickelt worden. Beispielsweise ist in der deutschen Patentanmeldung DE 10 2005 008 762, mit 31.08.2006 als Offenlegungstag, ein Dämmstoffelement beschrieben, das als blockartiges Einsetzteil in eine Wand- oder Deckenöffnung einsetzbar ist und das eine im Wesentlichen zentrale Öffnung zur Durchführung einer Heißleitung aufweist. Die Beigabe von mineralischer Stopfwolle wie bei der handwerklichen Ausführung ist somit nicht mehr erforderlich. In dem das Dämmstoffelement fernerhin als Fertigbauelement ausgebildet ist, ergibt sich eine schnelle und einfache Montage durch das Einsetzen nur eines Bauteils, ferner sind gleich bleibende hohe Dämmeigenschaften gewährleistet.

Die deutsche Patentanmeldung DE 10 2005 008 761 mit 31.08.2006 als Offenlegungstag beschreibt ebenso ein Dämmstoffelement, jedoch mit dem abweichenden Merkmal, dass mehrere ineinander geschachtelte Kernelemente vorgesehen sind. Diese konzentrisch angeordneten und einzeln heraustrennbaren Kernelemente definieren mit ihren Innenkonturen mehrere verschiedene Durchlassöffnungen für die Heißleitungen mit jeweils unterschiedlichen Öffnungsquerschnitten. Damit ist ein solches Dämmstoffelement universell für die Verlegung von Heißleitungen diverser Durchmesser ausgelegt.

Andere Dämmstoffelemente sind auch aus den europäischen Patentanmeldungen EP 1 108 829 A2 oder EP 0 217 396 A2 bekannt, siehe insbesondere, für die letzte, die Abbildung 7 und Spalte 7, Zeilen 1 bis 50.

Obwohl diese Dämmstoffelemente zwar eine brandschutztechnisch ausreichende Dämmwirkung aufweisen (gemäß DIN V 18160-1, bzw. MusterFeuVO (Muster FeuerungsVerordnung), wird in jüngster Zeit von vielen Anwendern, beispielsweise den Herstellern von Fertighäusern, eine höhere Dämmwirkung gefordert. Dies ist unter anderem auf die in jüngerer Zeit vorrangig im privaten Bereich wieder vermehrt eingesetzten Kanonenöfen oder Kaminöfen (sogenannte Schwedenöfen) zurückzuführen, die sich besonders als Zusatzheizungen zunehmender Beliebtheit erfreuen. In den Abgas- bzw. Schornsteinrohren solcher Öfen wurden zum Teil viel zu hohe Rauchgastemperaturen von bis zu 800 °C gemessen, die auf eine falsche Betriebsweise der Öfen zurückzuführen sind. Diese viel zu hohen Temperaturen (in der Regel wird von einer Maximaltemperatur von 400°C. ausgegangen) belasten natürlich die umliegende Mauer-, Decken- oder Gefachkonstruktion, einschließlich etwaiger Wand- und Fassadenverkleidungen im Bereich der Durchführung, insbesondere wenn diese brennbare Baustoffe aufweisen. Als besonders problematisch in diesem Zusammenhang erweisen sich zur Mauer-, Decken- oder Gefachkonstruktion gehörende Holzbalken im Bereich der Durchführung, vor allem dann, wenn sich diese oberhalb der Durchführung befinden, da die Wärmeausbreitung ja bekanntlich verstärkt nach oben erfolgt. Auch bei Einhaltung eines vorgeschriebenen Mindestabstandes von 200 mm (DIN V 18160-1:2006.01) können solche Holzbalken bei den viel zu hohen Temperaturen geschädigt werden und sich sogar entzünden (als dauerhafter Grenzwert für angrenzende Bauteile ist sowohl in der DIN V 18160-1:2006.01 als auch in der MusterFeuVO ein Wert von 85° vorgeschrieben, im Russbrandfall von 100°C). Ferner kann es unbemerkt zu einem sich ausbreitenden Schwelbrand im Bereich der Durchführung kommen.

Aufgabe der Erfindung ist es, einerseits die Dämmwirkung eines solchen als Fertigbauteil ausgebildeten Dämmstoffelements zu erhöhen und andererseits die umliegende Mauer-, Decken- oder Gefachkonstruktion besser vor Wärmeeinwirkung zu schützen.

Diese Aufgabe wird gelöst durch ein Dämmstoffelement gemäß den Merkmalen des Anspruches 1 und durch ein Dämmsystem gemäß den Merkmalen des Anspruchs 24. Vorteilhafte Weiterbildungen sind Gegenstand der abhängigen Unteransprüche 2 bis 23.

Zur Lösung der Aufgabe ist vorgesehen, dass das Dämmstoffelement wenigstens eine Rohrschale (bzw. Rohrmantel) aufweist, die in der Öffnung des Dämmstoffelements angeordnet ist und deren Innenkontur eine Durchlassöffnung für die durchzuführende Heißleitung, vorzugsweise ein Abgasrohr, insbesondere Schornsteinrohr, definiert. Erfindungswesentlich ist diese Rohrschale wickelartig aufgebaut und ummantelt die Heißleitung im Durchführungsbereich im Wesentlichen vollständig, wobei mit wickelartig gemeint ist, dass die Werkstofffasern eine im Wesentlichen in Umfangsrichtung dieser Rohrschale (und damit eine im Wesentlichen zweidimensionale) orientierte Ausrichtung aufweisen. Durch die Orientierung der Werkstofffasern weist die Rohrschale einen erhöhten Wärmeleitungswiderstand in radialer Richtung im Vergleich zu einer ungerichteten Orientierung der Werkstofffasern auf.

Durch die erhöhte Dämmwirkung der Rohrschale wird die Gefahr einer thermischen Schädigung, insbesondere aber eines Abbrennens oder Verzunderns der angrenzenden Mauer-, Decken- oder Gefachkonstruktion verringert. Dies gilt insbesondere auch dann, wenn eine hohe Temperatur- und/oder Wärmeeinwirkung nicht nur vorübergehender Art ist (im Sinne von wenigen Sekunden oder Minuten). Dieser Vorteil ist vor allem vor dem Hintergrund zu sehen, dass die bisherigen Dämmstoffelemente nicht für solch hohe Temperatur- und/oder Wärmebelastungen ausgelegt sind und die noch weit verbreiteten Stopfwollen nur bei einwandfreier Verarbeitung diesen Anforderungen genügen.

Durch den in radialer Richtung der Rohrschale sehr hohen Wärmeleitwiderstand in Verbindung mit dem Grundkörper gelangt entscheidend weniger Wärme von der Heißleitung (genau genommen von den die Heißleitung durchströmenden Gasen und/oder Dämpfen) in die an den Durchlass angrenzende Mauer-, Decken- oder Gefachkonstruktion, da die Wärmestrahlung besser abgeschirmt, aber auch die Wärmeleitung durch das Dämmelement hindurch erschwert wird. Eine Wärmeausbreitung wird somit also vorteilhaft erschwert, und die geforderten Oberflächentemperaturen von 85°C bzw. 100°C werden nicht überschritten. Eine Schädigung, der umliegenden Mauer-, Decken- oder Gefachkonstruktion insbesondere von brennbaren Baustoffen, infolge zu hoher Wärmeeinwirkung wird dauerhaft vermieden. Selbiges gilt auch für eine etwaige im Bereich des Durchlasses befindliche Wand- und/oder Fassadenverkleidung.

Das Dämmelement ist erfindungsgemäss aus Mineralwolle, vorzugsweise aus Steinwolle gebildet.

Die Rohrschale ist aus einem hitzebeständigen und Fasern beinhaltendem Material gebildet, erfindungsgemäss aus Mineralwolle und vorzugsweise aus Steinwolle.

In einer bevorzugten Weiterbildung ist vorgesehen, dass das Dämmstoffelement einen blockartigen, insbesondere quaderförmigen oder zylinderförmigen Grundkörper umfasst. Die Achse der Öffnung, in der die wenigstens eine Rohrschale angeordnet, ist, führt im Wesentlichen durch den Schwerpunkt des Grundkörpers, bevorzugt im Wesentlichen senkrecht zu dessen Vorder- bzw. Rückfläche. Speziell für Dämmelemente, die für den waagrechten oder senkrechten Einbau in Decken oder Wänden vorgesehen sind, ist die Öffnung bezogen auf eine Vorder- und/oder Rückfläche des Grundkörpers flächenmittig (d. h. im Flächenschwerpunkt) angeordnet. Dies ist vorteilhaft, damit eine versehentlich falsche Einbaulage vermieden wird. Bei einer asymmetrischen Anordnung müsste der Handwerker vor Ort exakt auf die richtige Positionierung der Öffnung für die Rohrschale achten, die in diesem Fall unten anzuordnen wäre, wegen der bereits erwähnten begünstigten Wärmeausbreitung nach oben.

Der Grundkörper ist, wie die Rohrschale auch, aus einem hitzebeständigem und Fasern beinhaltendem Material gebildet, erfindungsgemäss aus Mineralwolle und vorzugsweise aus Steinwolle. Es ist dabei nicht erforderlich, dass identische Materialien verwendet werden, wobei dies aus produktionstechnischen und logistischen Gründen vorteilhaft ist.

In einer weiterhin bevorzugten Weiterbildung, ist vorgesehen, dass die wenigstens eine Rohrschale eine axiale Länge aufweist, die größer ist, als der Abstand zwischen der Vorder- und Rückfläche des Grundkörpers. Hierdurch ergibt sich ein Überstand bzw. Vorstand des Rohrschalenendes an der Vorderfläche und/oder der Rückfläche. Dies hat zum einen den Vorteil, dass die nicht durch die Rohrschale abgedeckten Heißleitungsabschnitte weit genug vom Grundkörper entfernt sind und so eine geringere Temperatur- und/oder Wärmeeinwirkung gegeben ist. Ein weiterer Vorteil ist, dass durch diesen Überstand ein vorgegebener Mindestabstand einer Wand- und/oder Fassadenverkleidung (wie beispielsweise eine Gipskartonplatte) nicht unterschritten werden kann. Hierdurch wird die Schädigung der Wand- und/oder Fassadenverkleidung entscheidend gesenkt, ferner werden unschöne Verfärbungen in diesem Bereich infolge von Wärmeeinwirkung verhindert.

Eine bevorzugte Weiterbildung sieht vor, dass zum Einbringen der Öffnung in den Grundkörper von einer Außenfläche her ein Trennschnitt eingebracht wird, durch den das Sägeblatt eingeführt und/oder ausgeführt werden kann. Hierbei ist vorgesehen, dass der Trennschnitt nicht-gerade, sondern wenigstens einfach abgesetzt oder zumindest in einem Abschnitt wellenartig oder dergleichen ausgeführt ist. Hierdurch ergibt sich ein labyrinthartiges und/oder verzahnungsartiges ineinander greifen der Schnittflächen. Besonders bevorzugt ist hierbei eine Feder-Nut-artige Verbindung der Schnittflächen, wobei natürlich auch mehrere solche Feder-Nut-artigen Verbindungen pro Schnittverlauf vorgesehen sein können, auch in abweichenden Richtungen von der Schnittlinie. Durch eine solche Schnittführung soll ein Kamineffekt verhindert werden, der in einem solchen Trennschnitt einen Hitzesog zur Folge hat, insbesondere dann, wenn der Trennschnitt von der durchgeführten Heißleitung aus in einer annährend vertikalen Richtung nach oben verläuft.

Eine weiterhin bevorzugte Weiterbildung sieht vor, mehrere Trennschnitte einzubringen, so dass der Grundkörper in mehrere Teilkörper zerlegbar ist. Dies kann beispielsweise die Montage bzw. das Einsetzen in die Wand- oder Deckenöffnung vor Ort erleichtern.

In einer ebenfalls bevorzugten Weiterbildung weist das Dämmstoffelement mehrere konzentrisch ineinander geschachtelte Rohrschalen auf, deren innere und äußere Mantelflächen sich im Wesentlichen spaltfrei berühren. Dies bietet dem Handwerker vor Ort den Vorteil, dass er den Durchmesser (eine kreisrunde Innenkontur der Rohrschale vorausgesetzt, wobei dies keine zwingende Vorgabe ist) durch Entnahme der inneren Rohrschale bzw. -schalen an den Querschnitt der vor Ort vorhandenen und zu verbauenden Heißleitung anpassen kann. Es ergibt sich dadurch vorteilhaft ein hohes Maß an Flexibilität. Auch herstellungs- und vertriebsseitig ergeben sich Vorteile, da nur ein Dämmstoffelement bereitgestellt werden muss, dass dann quasi für alle gängigen Querschnitte von Heißleitungen verwendbar ist.

In einer bevorzugten Weiterbildung ist vorgesehen, dass jede Rohrschale einteilig und vorzugsweise umfangsmäßig geschlossen ausgebildet ist, wodurch ein Hitzesog (Kamineffekt) in radiale Fugen hinein (wie oben bereits beschrieben) verhindert wird, so dass keine Wärmebrücken durch Fugenspaltbildung entstehen.

In einer weiterhin bevorzugten Weiterbildung weist die wenigstens eine Rohrschale bzw. die innerste Rohrschale des Dämmstoffelements ein Kernelement auf. Ein solches Kernelement stellt eine Art Blindverschluss dar, für den Fall, dass das Dämmstoffelement zwar in die Wand- oder Deckenöffnung eingesetzt wird, aber zu jenem Zeitpunkt noch keine Heißleitung durchzuführen ist. Damit wird quasi die Option einer späteren Durchführung geschaffen, die dann problemlos, weil bereits vorbereitet, durchgeführt werden kann, ohne nennenswerten baulichen Aufwand. Ein solches Kernelement besteht in der Regel nicht aus gewickeltem Material, gleichwohl jedoch bevorzugt aus Mineralwolle und insbesondere aus Steinwolle. Dieses Kernelement ist herausnehmbar (im Sinne von herauslösbar oder heraustrennbar) in der innersten Durchlassöffnung für die Heißleitung angeordnet.

Eine besonders bevorzugte Weiterbildung sieht vor, dass das Dämmstoffelement wenigstens eine zusätzliche Wärme- bzw. Hitzeabschirmung aufweist. Diese Hitzeabschirmung ist vorzugsweise in Form wenigstens einer Lage bzw. Schicht ausgebildet und an wenigstens einer Seitenfläche und/oder Stirnfläche und/oder Bodenfläche des Grundkörpers angeordnet oder in diesen eingebracht. Mit einer solchen zusätzlichen Abschirmung können die Temperaturen an den Seitenflächen (Stirnflächen) gegenüber einem Dämmstoffelement ohne derartige Abschirmung erheblich reduziert werden, so dass die Temperatur der durchgeführten Heißleitung wesentlich erhöht sein kann, ohne die zulässigen Grenzwerte zu überschreiten. Im Versuch konnten die zulässigen Grenztemperaturen für angrenzende Bauteile bei Temperaturen der Heißleitung von 600°C und mehr eingehalten werden.

Vorzugsweise ist die Hitzeabschirmung aus Kalziumsilikat, Gips und/oder Gipsfaser gebildet und mittels Wasserglas mit dem Dämmstoffelement verklebt. Bevorzugt weist zudem ein solches Dämmstoffelement eine Anzeige für die Einbaulage auf, was insbesondere dann von Vorteil ist, wenn die Abschirmung nur in einer Richtung angebracht ist. Besonders bevorzugt ist die Abschirmung plattenartig ausgebildet.

Für eine Abschirmung in Verbindung mit den Merkmalen eines als Fertigbauteil ausgebildeten Dämmstoffelements wird ggf. gesondert Schutz beantragt.

Der Grundkörper und die Rohrschale des Dämmstoffelements sind in ein einer bevorzugten Weiterbildung aus in einem physiologischen Milieu löslichen Mineralfasern mit folgender chemischer Zusammensetzung in Gewichtsprozent gebildet:

| | | | | | |
|---|---|---|---|---|---|
| SiO₂ | 39 - 55 | % | vorzugsweise | 40 - 52 | % |
| Al₂O₃ | 16 - 27 | % | vorzugsweise | 16 - 26 | % |
| CaO | 9,5 - 20 | % | vorzugsweise | 10 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O (Na₂O + K₂O) | 10 -14,7 | % | vorzugsweise | 10 - 13,5 | % |
| P₂O₅ | 0 - 3 | % | insbesondere | 0 - 2 | % |
| Fe₂O₃ (Eisen gesamt) | 1,5 - 15 | % | insbesondere | 3,2 - 8 | % |
| B₂O₃ | 0 - 2 | % | vorzugsweise | 0 - 1 | % |
| TiO₂ | 0 - 2 | % | vorzugsweise | 0,4-1 | % |
| Sonstiges | 0 - 2,0 | | | | |

Bevorzugt ist vorgesehen, dass die Rohdichte des Grundkörpers und der Rohrschale im Bereich von 60 bis 180 kg/m³ liegt, vorzugsweise größer/gleich 80 kg/m³ ist und insbesondere 120 kg/m³ beträgt. Ebenfalls bevorzugt ist, dass der trockene Bindemittelgehalt kleiner 3,5 %, vorzugsweise kleiner 2,5 % ist.

Bevorzugt ist fernerhin, dass in Zusammenhang mit Mineralwolle, die in physiologischem Milieu löslich ist, die Zusammensetzung der Mineralfasern ein Alkali/Erdalkali-Massenverhältnis < 1 aufweist und die Faserstruktur des Dämmstoffelements bestimmt ist durch einen mittleren geometrischen Faserdurchmesser ≤ 4 µm.

In einer weiterhin bevorzugten Ausbildung ist vorgesehen, dass wenigstens die Vorder- oder die Rückfläche des Grundkörpers mit einer putzaffinen Trägerschicht versehen ist und/oder eine Kaschierung aufweist um den Dampfdiffusionswiderstand zu erhöhen, insbesondere in Form einer Aluminiumfolie, die dann auch als Anschluss für eine Dampfbremse dienen kann.

Das erfindungsgemäße Dämmstoffelement kann insbesondere als Fertigbauteil bereitgestellt werden.

Der beantragte Schutzumfang soll auch ein System zur Dämmung von Heißleitungsdurchführungen, insbesondere Schornsteinrohrdurchführungen, durch Öffnungen oder Durchbrüche in Wänden, Decken, Dächer oder sonstigem Mauerwerk oder Gefache, mit einem zuvor beschriebenen Dämmstoffelement umfassen.

Nachfolgend werden drei bevorzugte Ausführungsbeispiele der Erfindung anhand von Figuren beschrieben:
- Fig. 1a, 1b, 1c: zeigen ein erstes Ausführungsbeispiel eines erfindungsgemäßes Dämmstoffelement mit einer Rohrschale in einer Vorderansicht, einer Seitenansicht und einer perspektivischen Ansicht.
- Fig. 2a, 2b: zeigen ein zweites Ausführungsbeispiel des erfindungsgemäßen Dämmstoffelements mit drei konzentrisch angeordneten Rohrschalen in einer Vorderansicht und in einer Seitenansicht.
- Fig. 3: zeigt ein Ausführungsbeispiel des erfindungsgemäßen Dämmstoffelements mit einer Abschirmung.
- Fig. 4: zeigt zwei weitere Ausführungsbeispiele des erfindungsgemäßen Dämmstoffelements mit Abschirmungen.
- Fig. 5: zeigt ein weiteres Ausführungsbeispiel eines erfindungsgemäßen Dämmstoffelements mit einer Rohrschale in einer Seitenansicht.

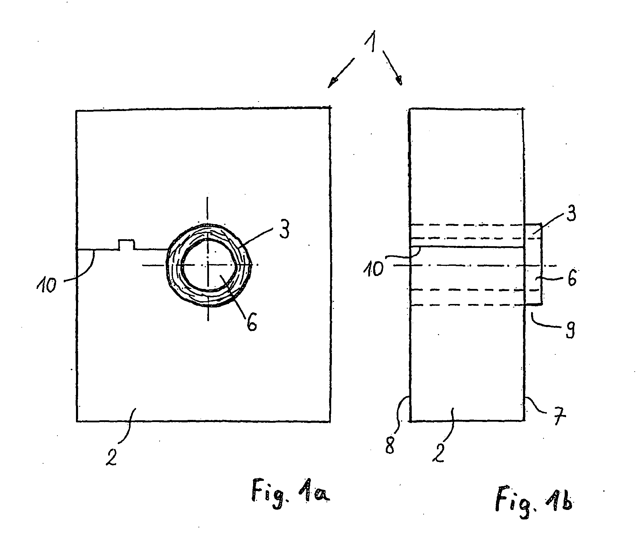

Die Fig. 1a zeigt ein insgesamt mit 1 bezeichnetes erfindungsgemäßes Dämmstoffelement in einem ersten Ausführungsbeispiel in einer Vorderansicht. Dieses Dämmstoffelement ist als ein im Wesentlichen fertig ausgebildetes Einsetzteil für Wand- oder Deckenöffnung oder dergleichen vorgesehen. Das Dämmstoffelement 1 umfasst einen blockartigen, genau genommen quaderförmigen Grundkörper 2 und eine Rohrschale 3, die in einer entsprechenden Öffnung im Grundköper 2 angeordnet ist. Die Rohrschale 3 weist einen kreisringförmigen Querschnitt auf, wobei der Querschnitt in Form und Größe im Wesentlichen entlang der Längsachse konstant ausgebildet ist. Jedoch ist es auch möglich eine Rohrschale mit veränderlichen Querschnittabmessungen bereitzustellen, so dass sich beispielsweise eine Keilform in Längsrichtung ergibt. Ebenfalls ist es möglich die Rohrschale mit anderen Querschnittsformen bereit zu stellen, so dass auch im Querschnitt nicht-kreisförmige Heißleitungen durchgeführt werden können. Die Rohrschale 3 erstreckt sich durch den Grundkörper 2 senkrecht von einer Vorderfläche 7 hin zu einer Rückfläche 8, was sich sehr gut aus Fig. 1b ergibt, die das Dämmstoffelement in einer Seitenansicht zeigt.

Alternativ kann der Grundkörper auch zylinderförmig ausgebildet sein, insbesondere bei Verwendung eines erfindungsgemäßen Dämmelements zur Durchführung von Heißleitungen im Deckenbereich.

Im Inneren der Rohrschale 3 ist ein massiv ausgeführtes zylindrisches Kernelement 6 angeordnet, welches die von der Rohrschale 3 definierte Durchlassöffnung zur Durchführung der Heißleitung verschließt. Damit ergibt sich die sehr vorteilhafte Option, eine Heißleitung erst zu einem späteren Zeitpunkt, d. h. nachdem das Dämmstoffelement bereits verbaut ist, durchzuführen und bis dorthin den Mauerdurchbruch oder dergleichen dauerhaft dichtend und dämmend zu verschließen und gegebenenfalls zu verputzen oder dergleichen.

Der Grundkörper 2 ist bevorzugt aus Steinwolle gebildet, wobei erfindungsgemäß mineralwolle als hitzebeständige Dämmmaterialien vorgesehen ist. Die Rohrschale 3 und das Kernelement 6 sind bevorzugt ebenfalls aus Steinwolle gebildet, wobei für die Rohrschale 3 erfindungsgemäß Mineralwolle vorgesehen ist und für das Kernelement 6 auch andere hitzebeständige Dämmmaterialien vorgesehen sein können. Der Grundkörper 2, die Rohrschale 3 einerseits und das Kernelement 6 andererseits können dabei aus unterschiedlichen Werkstoffen oder Materialien mit unterschiedlicher Zusammensetzung hergestellt sein.

Wesentlich ist es, dass die Rohrschale 3 wickelartig aufgebaut ist, wobei mit wickelartig gemeint ist, dass die Steinwollefasern eine im Wesentlichen in Schalenumfangsrichtung orientierte Ausrichtung aufweisen. Durch diese Wicklung der Steinwolle, erhöhen sich die Dämmwirkung und der Wärmeleitwiderstand der Rohrschale in radialer Richtung, wie oben beschrieben.

Die Rohrschale 3 ist, wie besonders gut aus Fig. 1b ersichtlich, bezogen auf die Tiefe bzw. Dicke des Grundkörpers 2 mit einer Überlänge ausgebildet, so dass sich ein Überstand bzw. Vorstand 9 des vorderen Endes der Rohrschale 3 an der vorderen Fläche 7 des Grundkörpers ergibt. Ebenfalls ist es möglich, den Überstand auch oder nur an der Rückfläche 8 auszubilden. Ein solcher Überstand 9 zwingt den Handwerker vor Ort, einen Mindestabstand zwischen einer Aussparung in der Wand- und/oder Fassadenverkleidung (wie beispielsweise eine Gipskartonplatte) und der Heißleitung einzuhalten, wie bereits oben beschrieben. Hierdurch wird die Schädigung angrenzender Bauteile entscheidend gesenkt, ferner werden unschöne Verfärbungen der Wand- und/oder Fassadenverkleidung infolge der Wärmeeinwirkung in diesem Bereich verhindert.

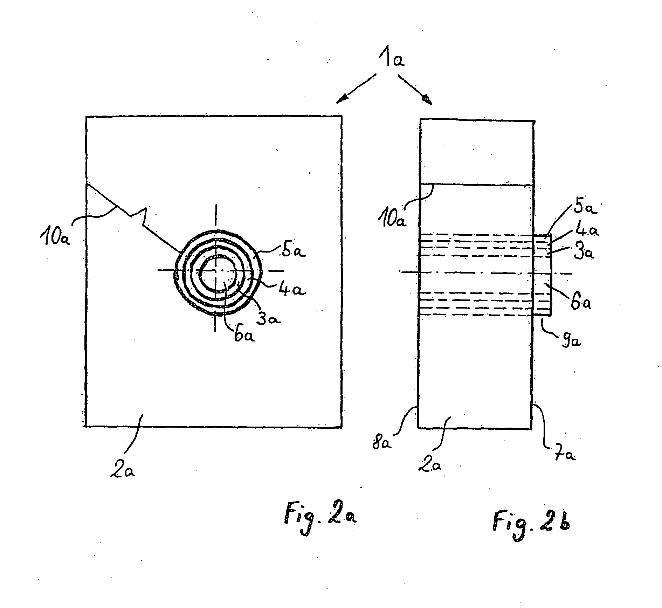

Die Fig. 2a und 2b zeigen ein zweites Ausführungsbeispiel des erfindungsgemäßen Dämmstoffelements. Im Folgenden soll nur auf die wesentlichen Unterschiede zum ersten Ausführungsbeispiel eingegangen werden.

Wie sich aus der Fig. 2a ergibt, umfasst das Dämmstoffelement 1a drei Rohrschalen 3a, 4a und 5a die quasi ineinander geschachtelt im Grundkörper 2a angeordnet sind. Selbstverständlich kann ein solches Dämmstoffelement auch mit nur zwei oder mit mehr als drei Rohrschalen bereitgestellt werden. Jede dieser Rohrschale 3a, 4a, 5a ist aus gewickelter Steinwolle gebildet. Die Rohrschalen weisen jeweils einen kreisringförmigen Querschnitt auf. Das Dämmstoffelement 1a bietet den Vorteil, dass der Handwerker vor Ort den Durchmesser der Durchlassöffnung an die durchzuführende Heißleitung anpassen kann, durch Entnahme der inneren Rohrschalen 3a und bzw. auch 4a. Für den Handwerker ergibt sich dadurch vorteilhaft ein hohes Maß an Flexibilität.

Wie sich aus der Fig. 2b ergibt, sind die Rohrschalen wiederum länger ausgeführt als die Dicke des Grundkörpers 2a, so dass sich ein Überstand 9a an der Vorderfläche 7a ergibt. Die ineinander geschachtelten Rohrschalen 3a, 4a und 5a sind mit gleicher axialer Länge ausgeführt, was sich sehr gut auf Fig. 2b ergibt. Selbstverständlich ist es auch möglich die einzelnen Rohrschalen mit unterschiedlicher Länge bereitzustellen.

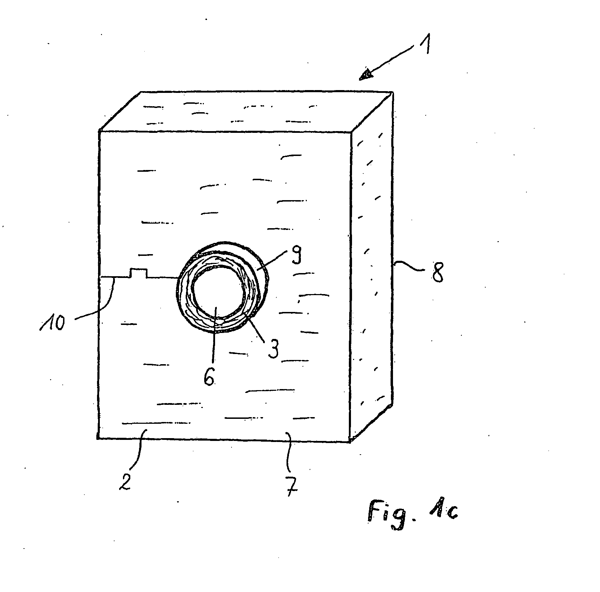

Bei beiden Ausführungsbeispielen ist es erforderlich, in den Grundkörper 2, 2a eine entsprechende Öffnung zur Aufnahme der Rohrschalen einzubringen. Die Einbringung einer solchen Öffnung kann beispielsweise mit einem Sägeschnitt 10, 10a von einer Seitenfläche her erfolgen, durch den das Sägeblatt eingeführt und auch wieder ausgeführt werden kann. Ein solcher Trennschnitt 10, 10a ist jedoch nicht gerade sondern in der Regel abgesetzt ausgeführt, um den schädlichen Kamineffekt zu vermeiden, wie oben bereits beschrieben. Im ersten Ausführungsbeispiel ist daher dieser Trennschnitt 10, wie Fig. 1a und 1c zeigen, dreifach im jeweils 90°-Winkel abgesetzt ausgeführt, so dass die beiden Schnittflächen Feder-Nut-artig ineinander greifen. Im zweiten Ausführungsbeispiel ist der Trennschnitt nur zweifach abgesetzt ausgeführt, wie Fig. 2a zeigt. Selbstverständlich sind dies nur exemplarische Beispiele für einen bevorzugten Schnittverlauf. Bei Verwendung beispielsweise einer Laserschneidanlage oder einer Wasserstrahlschneidanlage, könnte im Übrigen auch auf einen solchen Trennschnitt verzichtet werden.

Die Rohrschale 3 des ersten Ausführungsbeispieles sowie die äußerste Rohrschale 5a des zweiten Ausführungsbeispieles sind in den Öffnungen des Grundkörpers 2 bzw. 2a spaltfrei eingesetzt und in der Regel fest eingeklebt und damit festsitzend. Selbstverständlich ist es auch möglich, diese nicht einzukleben. Die Rohrschalen 3a und 4a des zweiten Ausführungsbeispieles sind im Wesentlichen spaltfrei und damit radial spielfrei eingesetzt und können so durch den Handwerker vor Ort entnommen werden. Gleiches gilt für die Kernelemente 6 und 6a beider Ausführungsbeispiele. Um ein ungewolltes Herausfallen, beispielsweise beim Transport oder der Lagerung, zu verhindern, können die Rohrschalen 3a und 4a und die Kernelemente 6 und 6a auch leicht eingeklebt sein, wobei diese Klebeverbindung dann lösbar bzw. trennbar ist.

Typischerweise wird das Dämmstoffelement in der zuvor beschriebenen Art, d. h. mit eingesetzter Rohrschale 3 und Kernelement 6 bzw. mit eingesetzten Rohrschalen 3a, 4a, 5a und Kernelement 6a bereitgestellt (monolithische Ausführung), wodurch sich Platz sparende und Logistik reduzierende Lager und Transportbedingungen ergeben. Insbesondere werden auf diese Weise aber auch die Rohrschalen 3, 3a, 4a und 5a vor Beschädigungen geschützt. In diesem Fertigzustand wird das Dämmstoffelement beispielsweise mit einer Folienverpackung versehen oder mit Spannbändern umwickelt, um diese Lager- und Transporteinheit zusammen zu halten und zu schützen. Selbstverständlich ist es auch möglich, ohne dabei vom Erfindungsgedanken abzuweichen, die Einzelkomponenten separat bereitzustellen (Ausführung als Bausatz), so dass der Handwerker diese vor Ort zusammenstellen muss.

Die Rohrschalen des ersten und/oder des zweiten Ausführungsbeispiels sind bevorzugt mit den Innendurchmessern 110 mm, 130 mm, 150 mm und/oder 180 mm ausgebildet (zuzüglich gängiger Toleranzmaße), da dies gängige Standardmaße für Schornsteinrohre sind. Selbstverständlich sind auch andere Durchmesser denkbar, insbesondere jedoch auch andere, d. h. nicht kreisförmige Durchführungsquerschnitte (beispielsweise rechteckig oder oval). Als Standardaußenmaß für ein solches Dämmstoffelement gemäß dem ersten und dem zweiten Ausführungsbeispiel ist in etwa eine horizontale Breite von 565 mm, eine vertikale Höhe von 700 mm und eine Tiefe bzw. Dicke von 200 mm vorgesehen, wobei dies keine zwingenden Vorgaben sind. Je nachdem kann es auch erforderlich sein, mehrere solcher Dämmstoffelemente hintereinander anzuordnen, um eine tiefere Wand- oder Deckenöffnung auszufüllen. Der Überstand der Rohrschalenenden über die Stirnflächen (Vorder- bzw. Rückfläche) des Grundkörpers ist mit 25 mm veranschlagt (entsprechend einer zweischichtigen Verplankung mit Gipskartonplatten der Standarddicke von 12,5 mm), so dass die entsprechenden Rohrschalen mit 25 mm Überlänge bereitgestellt werden muss, oder mit 50 mm Überlänge, falls ein beidseitiger Überstand gewünscht ist. Auch dies sind selbstverständlich keine zwingenden Vorgaben.

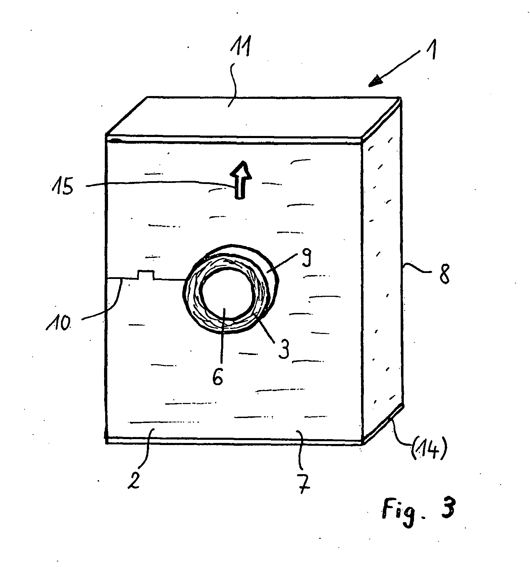

Figur 3 zeigt ein erfindungsgemäßes Dämmstoffelement 1 gemäß der Darstellung und Beschreibung der Figuren 1a bis 1c. Dieses Dämmstoffelement 1 weist an seiner oberen Seitenfläche (Stirnfläche) eine mit 11 bezeichnete Abschirmung auf. Diese schichtartige oder auch plattenartige Abschirmung 11 ist aus einem temperatur- bzw. hitzebeständigen Material gebildet, wie bspw. Kalziumsilikat, Gips und/oder Gipsfaser. Die Abschirmung 11 ist herstellerseitig bereits mit dem Grundkörper 2 des Dämmstoffelements 1 verbunden, bspw. mittels Wasserglas verklebt und überdeckt die gesamt Breite und Tiefe des Grundkörpers (2), wobei dies nicht zwangsläufig der Fall sein muss. Durch die Abschirmung 11 wird nach oben hin (bezogen auf die Einbaulage) ein noch besserer Wärmeschutz für die nach oben angrenzenden Gebäudebauteile erreicht. Um dem Handwerker vorort die korrekte Einbaulage vorzugeben, weist das Dämmstoffelement 1 zudem eine Anzeige für die korrekte Einbaulage 15 auf, die hier bspw. durch einen Pfeil realisiert ist. Zur Vermeidung von Einbaufehlern kann das erfindungsgemäße Dämmstoffelement 1 auch an der unteren Stirnfläche eine weitere Abschirmung 14 aufweisen, die ebenfalls in Form einer Lage (Platte bzw. Schicht) ausgebildet ist. Es versteht sich von selbst, dass die oben beschriebene Abschirmung 11 auch mit dem Ausführungsbeispiel gemäß der Figuren 2a und 2b kombinierbar ist.

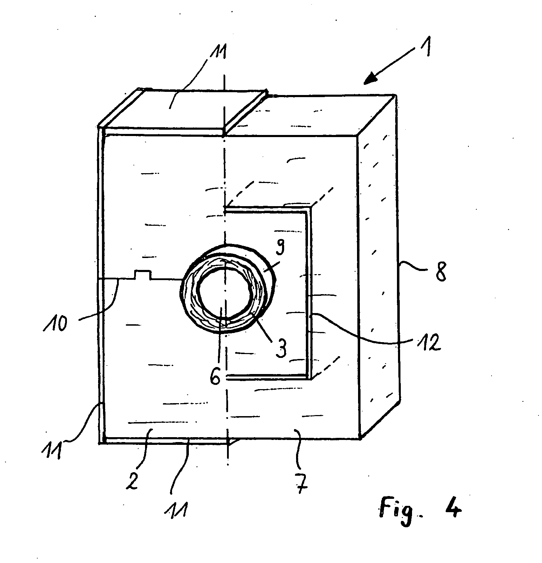

Die Figur 4 zeigt zwei weitere Ausführungsformen einer solchen Abschirmung. Im linken Bereich der Figur 4 ist eine Abschirmung 11 dargestellt, deren Lagen die Seitenflächen des Dämmstoffelements 1 komplett umgeben und ebenfalls herstellerseitig bereits fest mit diesem verbunden (bspw. verklebt sind). Die Abschirmung 11 umgibt hier die Seitenflächen (einschließlich Stirn- und Bodenfläche) sozusagen kastenartig. Im rechten Bereich der Fig. 4 ist die Abschirmung bereits herstellerseitig in den Grundkörper 2 eingearbeitet (bspw. eingeklemmt oder eingeklebt). Wie dargestellt bildet diese innere Abschirmung quasi einen Innenrahmen 12 aus, der in den Grundkörper 2 eingebracht und innenseitig so wie außenseitig vom Material des Grundkörpers 2 umgeben ist. Diese Variante bietet gegenüber den zuvor beschriebenen Ausführungsbeispielen mit Abschirmung den Vorteil einer nach wie vor einfachen Anpassbarkeit, da sich das außerhalb der inneren Abschirmung 12 befindliche Material des Grundkörpers 2 vom Handwerker vorort leicht und einfach auf die entsprechenden Maße der Wand- oder Deckenöffnung zuschneiden lässt. Selbstverständlich lassen sich die zuvor beschriebenen Abschirmungen auch mit dem Ausführungsbeispiel gemäß den Fig. 2a und 2b kombinieren. Denkbar ist zudem, die innere Abschirmung 12 auch nur oberhalb und/oder unterhalb (bezogen auf die Einbaulage) der Rohrschale 3 im Grundkörper 2 anzuordnen.

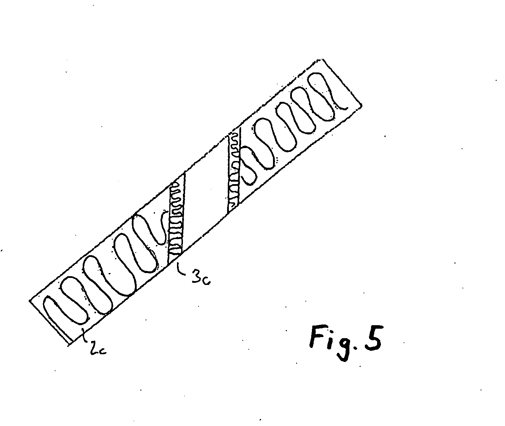

Figur 5 stellt ein erfindungsgemäßes Dämmelement zur Durchführung eines doppelwandigen Edelstahlkaminrohres durch ein Schrägdach dar. Die Öffnung ist ausgeführt im schiefen Winkel zu der Vorder- bzw. Rückfläche des Dämmelements entsprechend der Dachneigung, so dass der Edelstahlkamin senkrecht durch das Dach geführt ist, wobei die Achse der Öffnung durch den Schwerpunkt des Grundkörpers geht. Die Öffnung des Grundkörpers 2c weist eine gewickelte Rohrschale 3c auf, die als Aufnahme für den Edelstahlkamin dient.

## Patentansprüche

1. Dämmstoffelement (1, 1a) aus hitzebeständigem Material, wobei dieses Dämmstoffelement als Einsetzteil in eine Wand-, Decken- oder Dachöffnung oder dergleichen einsetzbar ist, mit wenigstens einer, längs einer geradlinigen Achse durch das Dämmstoffelement hindurchgehenden Öffnung,
wobei in der Öffnung wenigstens eine Rohrschale (3, 3a, 3c) aus einem hitzebeständigen Fasermaterial zur Aufnahme einer Heißleitung angeordnet ist, wobei die Innenkontur der Rohrschale (3, 3a, 3c) eine Durchlassöffnung für die Heißleitung definiert zur direkten und in Schalenumfangsrichtung vollständigen Ummantelung der Heißleitung, wobei das hitzebeständige Material und das hitzebeständige Fasermaterial Mineralwolle ist, wobei
das Fasermaterial wickelartig ausgebildet ist und sämtliche Fasern dieser Rohrschale eine im Wesentlichen zweidimensionale und in Schalenumfangsrichtung orientiere Ausrichtung derart aufweisen, dass die Rohrschale (3, 3a, 3c) durch die Orientierung der Fasern einen erhöhten Wärmeleitungswiderstand in radialer Richtung im Vergleich zu einer ungerichteten Orientierung der Fasern aufweist.

2. Dämmstoffelement (1, 1a) nach Anspruch 1,
**dadurch gekennzeichnet, dass**
das hitzebeständige Material und/oder das hitzebeständige Fasermaterial Steinwolle sind.

3. Dämmstoffelement nach Anspruch 1 oder 2,
**dadurch gekennzeichnet, dass**
das Dämmstoffelement (1, 1a) einen blockartigen, vorzugsweise quaderförmigen, oder zylinderförmigen Grundkörper (2, 2a, 2c) aufweist.

4. Dämmstoffelement nach Anspruch 3,
**dadurch gekennzeichnet, dass**
die Achse der Öffnung des Grundkörpers im Wesentlichen durch den Schwerpunkt des Grundkörpers führt, bevorzugt im Wesentlichen senkrecht zu der Vorder- bzw. Rückfläche.

5. Dämmstoffelement nach einem der vorherigen Ansprüche,
**dadurch gekennzeichnet, dass**
wenigstens eine Rohrschale (3, 3a, 3c) eine axiale Länge aufweist, die größer ist als der Abstand zwischen der Vorder- (7, 7a) und Rückfläche (8, 8a) des Grundkörpers, so dass sich zu wenigstens einer dieser beiden Flächen ein axialer Überstand (9, 9a) eines Endes wenigstens einer Rohrschale ergibt.

6. Dämmstoffelement nach einem der Ansprüche 2 bis 5,
**dadurch gekennzeichnet, dass**
der Grundkörper (2, 2a, 2c) wenigstens einen Trennschnitt (10, 10a) von einer Außenfläche zu der Öffnung aufweist, wobei dieser Trennschnitt vorzugsweise nicht-gerade ausgeführt ist.

7. Dämmstoffelement nach Anspruch 6,
**dadurch gekennzeichnet, dass**
der wenigstens eine Trennschnitt (10, 10a) zumindest abschnittsweise gewellt oder wenigstens einfach abgesetzt ausgeführt ist, so dass sich ein wellenartiges, labyrinthartiges und/oder verzahnungsartiges Ineinanderfügen der Schnittflächen ergibt, wobei vorzugsweise eine Feder-Nut-artige Verbindung der Schnittflächen vorgesehen ist.

8. Dämmstoffelement nach einem der vorherigen Ansprüche,
**dadurch gekennzeichnet, dass**
wenigstens eine Rohrschale einstückig und vorzugsweise umfangsmäßig geschlossen ausgebildet ist.

9. Dämmstoffelement nach einem der vorherigen Ansprüche,
**dadurch gekennzeichnet, dass**
die unmittelbar in der Öffnung des Grundkörpers (2, 2a, 2c) angeordnete Rohrschale (3, 5a) spaltfrei und vorzugsweise festsitzend in dieser Öffnung angeordnet ist.

10. Dämmstoffelement nach einem der vorherigen Ansprüche,
**dadurch gekennzeichnet, dass**
in einer inneren Durchlassöffnung für die Heißleitung ein herausnehmbares Kernelement (6, 6a) aus hitzebeständigem Material, vorzugsweise Mineralwolle und insbesondere Steinwolle, angeordnet ist, wobei dieses Kernelement im Wesentlichen spaltfrei in dieser Durchlassöffnung angeordnet ist.

11. Dämmstoffelement nach einem der vorherigen Ansprüche,
**dadurch gekennzeichnet, dass**
mehrere spaltfrei ineinander geschachtelte Rohrschalen (3a, 4a, 5a) umfasst sind, vorzugsweise zwei oder drei und insbesondere vier Rohrschalen, zur Anpassung an eine jeweilige Querschnittsform und/oder -größe der durchzuführenden Heißleitung, wobei diese Rohrschalen zueinander lösbar angeordnet sind.

12. Dämmstoffelement nach einem der Ansprüche 1 bis 10,
**dadurch gekennzeichnet, dass**
das Dämmstoffelement (1) exakt eine Rohrschale (3) aufweist.

13. Dämmstoffelement nach Anspruch 11 oder 12,
**dadurch gekennzeichnet, dass**
die wenigstens eine Rohrschale (3) oder die ineinander geschachtelten Rohrschalen (3a, 4a, 5a) mit einem kreisringförmigen Querschnitt und mit einem Innendurchmesser von 110 mm, 130 mm, 150 mm und/oder 180 mm, jeweils vorbehaltlich eines üblichen Toleranzmaßes, ausgebildet sind.

14. Dämmstoffelement nach einem der vorherigen Ansprüche,
**dadurch gekennzeichnet, dass**
das Dämmstoffelement (1) wenigstens eine zusätzliche Hitzeabschirmung (11, 12) aufweist.

15. Dämmstoffelement nach Anspruch 14,
**dadurch gekennzeichnet, dass**
die Hitzeabschirmung (11, 12) in Form wenigstens einer Lage, insbesondere plattenartiger Ausbildung, an wenigstens einer Seitenfläche (8) des Grundkörpers (2) angebracht oder in diesen eingebracht ist.

16. Dämmstoffelement nach Anspruch 14 oder 15
**dadurch gekennzeichnet, dass**
die Hitzeabschirmung (11, 12) aus Kalziumsilikat, Gips und/oder Gipsfaser gebildet ist.

17. Dämmstoffelement nach einem der vorherigen Ansprüche, insbesondere nach Anspruch 13, 14 oder 15,
**dadurch gekennzeichnet, dass**
dieses eine Anzeige (15) für die Einbaulage aufweist.

18. Dämmstoffelement nach einem der vorherigen Ansprüche,
**dadurch gekennzeichnet, dass**
der Grundkörper (2, 2a, 2c) und die wenigstens eine Rohrschale (3, 3a, 3c) aus in einem physiologischen Milieu löslichen Mineralfasern mit folgender chemischer Zusammensetzung in Gewichtsprozent gebildet sind:
| | | | |
|---|---|---|---|
| SiO₂ | 39-55 % | vorzugsweise | 40-52 % |
| Al₂O₃ | 16-27 % | vorzugsweise | 16-26 % |
| CaO | 9,5-20 % | vorzugsweise | 10 - 18 % |
| MgO | 1 - 5 % | vorzugsweise | 1-4,9 % |
| Na₂O | 0-15 % | vorzugsweise | 2-12 % |
| K₂O | 0-15 % | vorzugsweise | 2-12 % |
| R₂O (Na₂O + K₂O) | 10 - 14,7 % | vorzugsweise | 10 - 13,5 % |
| P₂O₅ | 0 - 3 % | insbesondere | 0-2 % |
| Fe₂O₃ (Eisen gesamt) | 1,5-15 % | insbesondere | 3,2 - 8 % |
| B₂O₃ | 0-2 % | vorzugsweise | 0-1 % |
| TiO₂ | 0-2 % | vorzugsweise | 0,4 - 1 % |
| Sonstiges | 0-2,0 % | | |

19. Dämmstoffelement nach einem der vorherigen Ansprüche,
**dadurch gekennzeichnet, dass**
die Rohdichte des Grundkörpers (2, 2a, 2c) und der wenigstens einen Rohrschale (3, 3a, 3c) im Bereich von 60 bis 180 kg/m³ liegt, vorzugsweise größer/gleich 80 kg/m³ ist und insbesondere 120 kg/m³ beträgt.

20. Dämmstoffelement nach einem der vorherigen Ansprüche,
**dadurch gekennzeichnet, dass**
der trockene Bindemittelgehalt des Grundkörpers (2, 2a, 2c) und der wenigstens einen Rohrschale (3, 3a, 3c) kleiner 3,5 %, vorzugsweise kleiner 2,5 % ist.

21. Dämmstoffelement nach einem der vorherigen Ansprüche,
**dadurch gekennzeichnet, dass**
wenigstens die Vorder- (7, 7a) oder die Rückfläche (8, 8a) des Grundkörpers (2, 2a) mit einer putzaffinen Trägerschicht versehen ist.

22. Dämmstoffelement nach einem der vorherigen Ansprüche,
**dadurch gekennzeichnet, dass**
wenigstens die Vorder- (7, 7a) oder die Rückfläche (8, 8a) des Grundkörpers (2, 2a) eine Kaschierung aufweist, insbesondere in Form einer Aluminiumfolie.

23. Dämmstoffelement nach einem der vorherigen Ansprüche,
**dadurch gekennzeichnet, dass**
das es als Fertigbauteil bereitgestellt ist.

24. System zur Dämmung von Heißleitungsdurchführungen, insbesondere Schornsteinrohrdurchführungen, durch Öffnungen oder Durchbrüche in Wänden, Decken, Dächern oder sonstigem Mauerwerk oder Gefache, mit einem Dämmstoffelement (1, 1a) gemäß einem der vorhergehenden Ansprüche.

## Claims

1. An insulating element (1, 1 a) made from heat-resistant material,
wherein the insulating element is insertable into a wall-, ceiling- or roof opening or the like and includes at least one opening extending through the insulating element along a linear axis,
wherein at least one pipe shell (3, 3a, 3c) made from a heat resistant fiber material is arranged in the opening for receiving a hot pipe, wherein an inner contour of the pipe shell (3, 3a, 3c) defines a pass through opening for the hot pipe for directly and completely encasing the hot pipe in a circumferential direction of the hot pipe,
wherein the heat resistant material and the heat resistant fiber material is mineral wool,
wherein the fiber material is wound and all fibers of the pipe shell essentially have a two dimensional orientation in a direction of the circumference of the pipe shell,
wherein the pipe shell (3, 3a, 3c) has a higher heat conduction resistance in radial direction through the orientation of the fibers compared to non oriented fibers.

2. The insulating element (1, 1a) according to claim 1, wherein the heat resistant material and/or the heat resistant fiber material is rock wool.

3. The insulating element according to claim 1 or 2,
wherein the insulating element (1, 1a) has a block-shaped, preferably cuboid or cylindrical body (2, 2a, 2c).

4. The insulating element according to claim 3, wherein the axis of the opening of the body essentially extends through the center of gravity of the body, preferably essentially orthogonal to its front- or rear surface.

5. The insulating element according to one of the preceding claims,
wherein at least one pipe shell (3, 3a, 3c) has an axial length that is greater than a distance between the front- (7, 7a) and rear surface (8, 8a) of the body, so that an axial protrusion (9, 9a) of an end of at least one pipe shell is provided at least at one of the two surfaces.

6. The insulating element according to one of the claims 2 through 5,
wherein the body (2, 2a, 2c) has at least one split cut (10, 10a) from an external surface to the opening, wherein the split cut is preferably non linear.

7. The insulating element according to claim 6, wherein at least a section of the at least one split cut (10, 10a) is corrugated or at least provided with a step, so that a corrugated, labyrinthine and/or teeth-like joining of the cut surfaces is provided, wherein the cut surfaces are preferably joined through a tongue and groove joint.

8. The insulating element according to one of the preceding claims,
wherein at least one pipe shell is provided integral in one piece and preferably provided circumferentially closed.

9. The insulating element according to one of the preceding claims,
wherein the pipe shell (3, 5a) arranged directly in the opening of the body (2, 2, 2c) is arranged gap-free and preferably fixated in the opening.

10. The insulating element according to one of the the preceding claims, wherein a removable core element (6, 6a) made from heat-resistant material, preferably mineral wool and in particular rock wool, is arranged in an inner opening for the hot pipe, wherein the core element is arranged essentially gap-free in the inner opening.

11. The insulating element according to one of the preceding claims,
wherein the insulating element includes plural pipe shells (3a, 4a, 5a) nested gap-free inside each other, preferably two or three and especially four pipe shells, for adjusting the thermal insulationg element to a respective cross-sectional shape and/or -size of the hot pipe to be run through, wherein the pipe shells are arranged so that they are detachable from each other.

12. The insulating element according to one of the claims 1 through 10,
wherein the insulating element (1) includes exactly one pipe shell (3).

13. The insulating element according to claim 11 or 12, wherein
the at least one pipe shell (3) or the nested pipe shells (3a, 4a, 5a) are provided with a circular cross-section and with an inner diameter of 110 mm, 130 mm, 150 mm and/or 180 mm, each subject to a common tolerance.

14. The insulating element according to one of the preceding claims,
wherein the insulating element (1) includes at least one additional heat shield (11, 12).

15. The insulating element according to claim 14, wherein the heat shield (11, 12) is mounted to or incorporated into at least one side surface (8) of the body (2) in the form of at least one layer, in particular configured as a panel.

16. The insulating element according to claim 14 or 15, wherein the heat shield (11, 12) is formed from calcium silicate, gypsum and/or gypsum fiber.

17. The insulating element according to one of the preceding claims, in particular according to claim 13, 14 or 15, wherein the insulating element includes an indicator (15) indicating an installation position.

18. The insulating element according to one of the preceding claims, wherein the body (2, 2a, 2c) and the at least one pipe shell (3) are formed from mineral fibers which are soluble in a physiological envioronment and which have the following chemical composition in % by weight:
| | | | |
|---|---|---|---|
| SiO₂ | 39-55 % | preferably | 40-52 % |
| Al₂O₃ | 16-27 % | preferably | 16-26 % |
| CaO | 9.5 -20 % | preferably | 10-18 % |
| MgO | 1-5 % | preferably | 1-4.9 % |
| Na₂O | 0-15 % | preferably | 2-12 % |
| K₂O | 0-15 % | preferably | 2-12 % |
| R₂O (Na₂O + K₂O) | 10-14.7 % | preferably | 10-13.5 % |
| P₂O₅ | 0-3 % | in particular | 0-2 % |
| Fe₂O₃ (total iron) | 1.5-15 % | In particular | 3.2-8 % |
| B₂O₃ | 0-2 % | Preferably | 0 - 1 % |
| TiO₂ | 0-2 % | Preferably | 0.4-1 % |
| Other | 0-2.0 % | | |

19. The insulating element according to one of the preceding claims, wherein the density of the body (2, 2a, 2c) and the at least one pipe shell (3, 3a, 3c) is in a range of 60 to 180 kg/m³, preferably greater than/equal to 80 kg/m³ and in particular 120 kg/m³.

20. The insulating element according to one of the preceding claims,
wherein
the dry binder content of the body (2, 2a, 2c) and the at least one pipe shell (3, 3a, 3c) is less than 3.5 %, preferably less than 2.5 %.

21. The insulating element according to one of the preceding claims,
wherein at least the front- (7, 7a) or the rear surface (8, 8a) of the body (2, 2a) is provided with a carrier layer with an affinity for plaster.

22. The insulating element according to one of the preceding claims,
wherein
at least the front- (7, 7a) or the rear surface (8, 8a) of the body (2, 2a) has a lamination, in particular in the form of an aluminum foil.

23. The insulating element according to one of the preceding claims,
wherein the insulating element it is provided as a prefabricated comppnent.

24. A system for the insulating hot pipe passages, in particular chimney pipe passages, through-openings or break-throughs in walls, ceilings, roofs or other masonry or panels, including an insulating element (1, 1a) according to one of the preceding claims.

## Revendications

1. Elément isolant (1, 1a) en matériau résistant à la chaleur, cet élément isolant étant utilisable en tant que pièce à insérer dans une ouverture de paroi, de plafond ou de toit ou similaire, avec au moins une ouverture traversant l'élément isolant le long d'un axe rectiligne,
au moins une enveloppe tubulaire (3, 3a, 3c) constituée d'un matériau fibreux étant disposée dans l'ouverture pour loger une conduite chaude, le contour intérieur de l'enveloppe tubulaire (3, 3a, 3c) définissant une ouverture de passage pour la conduite chaude pour envelopper directement et complètement dans la direction circonférentielle d'enveloppe la conduite chaude, le matériau résistant à la chaleur et le matériau fibreux résistant à la chaleur étant de la laine minérale,
le matériau fibreux étant constitué à la façon d'un enroulement, et toutes les fibres de cette enveloppe tubulaire présentant un alignement essentiellement bidimensionnel et orienté dans la direction circonférentielle d'enveloppe de sorte que l'enveloppe tubulaire (3, 3a, 3c) présente, du fait de l'orientation des fibres, une résistance à la conduction thermique dans la direction radiale qui est accrue en comparaison avec une orientation non dirigée des fibres.

2. Elément isolant (1, 1a) selon la revendication 1,
**caractérisé en ce que**
le matériau résistant à la chaleur et/ou le matériau fibreux résistant à la chaleur sont de la laine de roche.

3. Elément isolant selon les revendications 1 ou 2,
**caractérisé en ce que**
l'élément isolant (1, 1a) présente un corps de base (2, 2a, 2c) du type bloc, de préférence parallélépipédique, ou cylindrique.

4. Elément isolant selon la revendication 3,
**caractérisé en ce que**
l'axe de l'ouverture du corps de base conduit essentiellement à travers le centre de gravité du corps de base, de préférence essentiellement perpendiculairement à la face avant ou arrière.

5. Elément isolant selon l'une des revendications précédentes,
**caractérisé en ce que**
au moins une enveloppe tubulaire (3, 3a, 3c) présente une longueur axiale qui est supérieure à la distance entre la face avant (7, 7a) et arrière (8, 8a) du corps de base de sorte qu'il en résulte, par rapport à au moins une de ces deux faces, une saillie axiale (9, 9a) d'une extrémité d'au moins une enveloppe tubulaire.

6. Elément isolant selon l'une des revendications 2 à 5,
**caractérisé en ce que**
le corps de base (2, 2a, 2c) présente au moins une coupe (10, 10a) depuis une face externe jusqu'à l'ouverture, cette coupe étant de préférence réalisée de façon non rectiligne.

7. Elément isolant selon la revendication 6,
**caractérisé en ce que**
la coupe (10, 10a) au moins au nombre de un est réalisée de façon ondulée au moins par tronçons ou avec au moins un décalage unique de sorte qu'il en résulte une imbrication des faces de coupe ondulée, à la façon d'un labyrinthe et/ou à la façon d'un engrenage, une liaison de type à rainure et languette des faces de coupe étant de préférence prévue.

8. Elément isolant selon l'une des revendications précédentes,
**caractérisé en ce**
**qu'**au moins une enveloppe tubulaire est constituée d'une seule pièce et de préférence fermée en ce qui concerne la circonférence.

9. Elément isolant selon l'une des revendications précédentes,
**caractérisé en ce que**
l'enveloppe tubulaire (3, 5a) disposée directement dans l'ouverture du corps de base (2, 2a, 2c) est dépourvue d'interstice et est disposée de préférence de façon fixe dans cette ouverture.

10. Elément isolant selon l'une des revendications précédentes,
**caractérisé en ce que**,
dans une ouverture de passage intérieure pour la conduite chaude, il est disposé un élément central (6, 6a) extractible en matériau résistant à la chaleur, de préférence de la laine minérale et en particulier de la laine de roche, cet élément central étant disposé de façon essentiellement dépourvue d'interstice dans cette ouverture de passage.

11. Elément isolant selon l'une des revendications précédentes,
**caractérisé en ce que**
plusieurs enveloppes tubulaires (3a, 4a, 5a) emboîtées les unes dans les autres sans interstice sont contenues, de préférence deux ou trois ou en particulier quatre enveloppes tubulaires, pour l'adaptation à une forme et/ou dimensions de coupe transversale respective de la conduite chaude à faire passer, ces enveloppes tubulaires étant disposées de façon détachable entre elles.

12. Elément isolant selon l'une des revendications 1 à 10,
**caractérisé en ce que**
l'élément isolant (1) présente exactement une enveloppe tubulaire (3).

13. Elément isolant selon la revendication 11 ou 12,
**caractérisé en ce que**
l'enveloppe tubulaire (3) au moins au nombre de un, ou les enveloppes tubulaires (3a, 4a, 5a) emboîtées les unes dans les autres sont constituées avec une section transversale en forme d'anneau de cercle et avec un diamètre intérieur de 110 mm, 130 mm, 150 mm et/ou 180 mm, respectivement sous réserve d'une cote de tolérance habituelle.

14. Elément isolant selon l'une des revendications précédentes,
**caractérisé en ce que**
l'élément isolant (1) présente au moins une protection thermique (11, 12) supplémentaire.

15. Elément isolant selon la revendication 14,
**caractérisé en ce que**
la protection thermique (11, 12) est mise en place sous la forme d'au moins une couche, en particulier du type plaque, sur au moins une face latérale (8) du corps de base (2), ou bien est introduite dans ce dernier.

16. Elément isolant selon les revendications 14 ou 15,
**caractérisé en ce que**
la protection thermique (11, 12) est formée de silicate de calcium, de gypse et/ou de fibre de gypse.

17. Elément isolant selon l'une des revendications précédentes, en particulier selon les revendications 13, 14 ou 15,
**caractérisé en ce que**
cet élément présente une indication (1) de l'emplacement de montage.

18. Elément isolant selon l'une des revendications précédentes,
**caractérisé en ce que**
le corps de base (2, 2a, 2c) et l'enveloppe tubulaire (3, 3a, 3c) au moins au nombre de un sont formés de fibres minérales, solubles dans un milieu physiologique, ayant la composition chimique suivante en pour cent-poids :
| | | | |
|---|---|---|---|
| SiO₂ | 39 - 55 % | de préférence | 40 - 52 % |
| Al₂O₃ | 16 - 27 % | de préférence | 16 - 26 % |
| CaO | 9,5 - 20 % | de préférence | 10 - 18 % |
| MgO | 1 - 5 % | de préférence | 1 - 4,9 % |
| Na₂O | 0 - 15 % | de préférence | 2 - 12 % |
| K₂O | 0 - 15 % | de préférence | 2 - 12 % |
| R₂O (Na₂O + K₂O) | 10 - 14,7 % | de préférence | 10 - 13,5 % |
| P₂O₅ | 0 - 3 % | en particulier | 0 - 2 % |
| Fe₂O₃ (fer total) | 1,5 - 15 % | en particulier | 3,2 - 8 % |
| B₂O₃ | 0 - 2 % | de préférence | 0 - 1 % |
| TiO₂ | 0 - 2 % | de préférence | 0,4 - 1 % |
| Autres | 0 - 2,0 % | | |

19. Elément isolant selon l'une des revendications précédentes,
**caractérisé en ce que**
la masse volumique apparente du corps de base (2, 2a, 2c) et de l'enveloppe tubulaire (3, 3a, 3c) au moins au nombre de un se situe dans la plage de 60 à 180 kg/m³, est de préférence supérieure/égale à 80 kg/m³ et en particulier est égale à 120 kg/m³.

20. Elément isolant selon l'une des revendications précédentes,
**caractérisé en ce que**
la teneur sèche en liants du corps de base (2, 2a, 2c) et de l'enveloppe tubulaire (3, 3a, 3c) au moins au nombre de un est inférieure à 3,5 %, de préférence inférieure à 2,5 %.

21. Elément isolant selon l'une des revendications précédentes,
**caractérisé en ce que**
au moins la face avant (7, 7a) ou la face arrière (8, 8a) du corps de base (2, 2a) est munie d'une couche porteuse jouxtant l'enduit.

22. Elément isolant selon l'une des revendications précédentes,
**caractérisé en ce que**
au moins la face avant (7, 7a) ou la face arrière (8, 8a) du corps de base (2, 2a) présente une doublure, en particulier sous forme de feuille d'aluminium.

23. Elément isolant selon l'une des revendications précédentes,
**caractérisé en ce**
**qu'**il est fourni en tant que pièce préfabriquée.

24. Système d'isolation de traversées de conduite chaude, en particulier des traversées de tube de cheminée, à travers des ouvertures ou des percements dans des parois, des plafonds, des toits ou autres maçonneries ou casiers, avec un élément isolant (1, 1a) selon l'une des revendications précédentes.
